(19) Europäisches Patentamt / European Patent Office / Office européen des brevets

(11) **EP 3 958 349 A1**

(12) **EUROPEAN PATENT APPLICATION**
published in accordance with Art. 153(4) EPC

(43) Date of publication:
**23.02.2022 Bulletin 2022/08**

(21) Application number: **20791342.7**

(22) Date of filing: **08.04.2020**

(51) International Patent Classification (IPC):
$H01M\ 4/13$ (2010.01)   $H01M\ 4/134$ (2010.01)
$H01M\ 4/1393$ (2010.01)   $H01M\ 4/38$ (2006.01)
$H01M\ 4/48$ (2010.01)

(52) Cooperative Patent Classification (CPC):
H01M 4/13; H01M 4/134; H01M 4/1393;
H01M 4/38; H01M 4/48; Y02E 60/10

(86) International application number:
**PCT/JP2020/015865**

(87) International publication number:
**WO 2020/213499 (22.10.2020 Gazette 2020/43)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **19.04.2019 JP 2019079959**

(71) Applicant: **Panasonic Corporation
Kadoma-shi
Osaka 571-8501 (JP)**

(72) Inventors:
• **YOKOYAMA, Yuji**
  **Osaka-shi, Osaka 540-6207 (JP)**
• **TSUZUKI, Kouhei**
  **Osaka-shi, Osaka 540-6207 (JP)**
• **MASAI, Kohei**
  **Osaka-shi, Osaka 540-6207 (JP)**

(74) Representative: **Vigand, Philippe et al
Novagraaf International SA
Chemin de l'Echo 3
1213 Onex - Genève (CH)**

(54) **NEGATIVE ELECTRODE FOR NON-AQUEOUS ELECTROLYTE SECONDARY BATTERY AND NON-AQUEOUS ELECTROLYTE SECONDARY BATTERY**

(57)   This negative electrode for non-aqueous electrolyte secondary batteries comprises a negative electrode core and a negative electrode mixture layer provided on the surface of the negative electrode core and including a negative electrode active substance. The negative electrode mixture layer has: a first layer including substantially only graphite having a BET specific surface area of 0.5-2.5 m2/g, as a negative electrode active substance; and a second layer including substantially only at least either an element that alloys with lithium or a compound containing said element, as a negative electrode active substance.

Figure 2

EP 3 958 349 A1

**Description**

TECHNICAL FIELD

The present disclosure generally relates to a negative electrode for a non-aqueous electrolyte secondary battery and a non-aqueous electrolyte secondary battery using the negative electrode.

BACKGROUND ART

Elements that are to be alloyed with lithium, such as silicon and tin, or compounds containing such elements are known to be able to occlude more lithium ions per unit volume comparing to carbon materials, such as graphite. Thus, these elements or compounds can be used as a negative electrode active material to enlarge a battery capacity. It is also known to use a combination of a carbon material and a compound such as a silicon material as the negative electrode active material for a negative electrode.

Patent Literatures 1 and 2, for example, disclose a negative electrode for a non-aqueous electrolyte secondary battery comprising a bilayer-structured negative electrode mixture layer constituted with: a first layer including an element to be alloyed with lithium or a compound containing such an element, and provided on a surface of a negative electrode core; and a second layer including a carbon material such as graphite, and provided on a surface of the first layer. For the carbon material, a graphite having a BET specific surface area of 3 to 5 $m^2$/g is typically used.

CITATION LIST

PATENT LITERATURE

PATENT LITERATURE 1: Japanese Unexamined Patent Application Publication No. 2009-266705
PATENT LITERATURE 2: Japanese Unexamined Patent Application Publication No. 2015-069711

SUMMARY

For a non-aqueous electrolyte secondary battery having a large capacity, such as a lithium ion battery, it is an essential problem to suppress a lowering of the capacity during high-temperature storage. Conventional non-aqueous secondary batteries comprising such a negative electrode as disclosed in Patent Literatures 1 and 2, however, has still a room for improvement in the high-temperature storage characteristic.

It is an object of the present disclosure to improve the high-temperature storage characteristic in a non-aqueous electrolyte secondary battery using a negative electrode active material with a large capacity.

A negative electrode for a non-aqueous electrolyte secondary battery of an aspect of the present disclosure is a negative electrode comprising: a negative electrode core; and a negative electrode mixture layer provided on a surface of the negative electrode core, the negative electrode mixture layer including a negative electrode active material, wherein the negative electrode mixture layer has: a first layer including a graphite having a BET specific surface area of 0.5 to 2.5 $m^2$/g as the negative electrode active material; and a second layer including at least one of an element to be alloyed with lithium and a compound containing the element as the negative electrode active material.

A non-aqueous electrolyte secondary battery of an aspect of the present disclosure comprises: the negative electrode; a positive electrode; and a non-aqueous electrolyte.

According to the negative electrode of the present disclosure, a non-aqueous electrolyte secondary battery having excellent high-temperature storage characteristic may be provided.

BRIEF DESCRIPTION OF DRAWING

FIG. 1 is a perspective view of the non-aqueous electrolyte secondary battery of an example of an embodiment.
FIG. 2 is a sectional view of the negative electrode of an example of an embodiment.

DESCRIPTION OF EMBODIMENTS

The present inventors have intensively investigated to solve the aforementioned problem, and as a result, have succeeded in significant suppression of lowering of the battery capacity during high-temperature storage by using a negative electrode comprising a bilayer-structured negative electrode mixture layer having: a first layer including a graphite having a BET specific surface area of 0.5 to 2.5 $m^2/g$; and a second layer including at least one of an element to be alloyed with lithium and a compound containing the element. This effect is considered to be largely attributable to suppression of a side reaction of an electrolyte solution in the negative electrode by reducing the BET specific surface area of the graphite as compared to the conventional ones.

In addition, the high-temperature storage characteristic is found to be further improved by the presence of, as the negative electrode active materials, only graphite in the first layer and only at least one of an element to be alloyed with lithium and a compound containing the element in the second layer, and by each of the active materials being not intermixed.

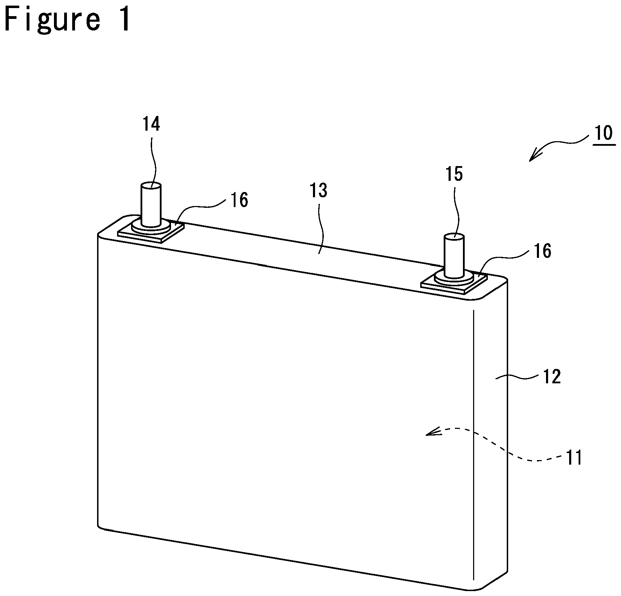

Hereinafter, an example of an embodiment of the negative electrode for a non-aqueous electrolyte secondary battery and the non-aqueous electrolyte secondary battery using the negative electrode according to the present disclosure will be described in detail. FIG. 1 is a perspective view illustrating a non-aqueous electrolyte secondary battery 10 of an example of an embodiment. The non-aqueous electrolyte secondary battery 10 exemplified in FIG. 1 is a rectangular battery comprising a rectangular exterior housing can 12, but the exterior housing body is not limited to the exterior housing can 12 and may be, for example, a cylindrical exterior housing can, and may be an exterior housing body constituted with a laminated sheet including a metal layer and a resin layer.

The non-aqueous electrolyte secondary battery 10 comprises an electrode assembly 11, a non-aqueous electrolyte, and the rectangular exterior housing can 12 housing them. The exterior housing can 12 is a metal container having a flat, approximately rectangular-parallelepiped shape with one opened face. The electrode assembly 11 has, for example, a positive electrode, the negative electrode, and a separator, and is a flatly-formed wound-type electrode assembly in which the positive electrode and the negative electrode are spirally wound with the separator interposed therebetween. The electrode assembly 11 has a positive electrode lead connected to the positive electrode by welding or the like and a negative electrode lead connected to the negative electrode by welding or the like. The electrode assembly 11 may be a laminated-type electrode assembly in which a plurality of the positive electrodes and a plurality of the negative electrodes are laminated alternatively one by one with the separators interposed therebetween.

The non-aqueous electrolyte includes a non-aqueous solvent and an electrolyte salt dissolved in the non-aqueous solvent. As the non-aqueous solvent, esters, ethers, nitriles, amides, a mixed solvent of two or more thereof, and the like may be used, for example. The non-aqueous solvent may contain a halogen-substituted derivative in which at least a part of hydrogens in these solvents is replaced with a halogen atom such as fluorine. The non-aqueous electrolyte is not limited to a liquid electrolyte, and may be a solid electrolyte using a gel polymer or the like. As the electrolyte salt, a lithium salt such as $LiPF_6$ is used, for example.

The non-aqueous electrolyte secondary battery 10 has a sealing assembly 13 sealing the opening of the exterior housing can 12, a positive electrode terminal 14 electrically connected to the positive electrode via the positive electrode lead, and a negative electrode terminal 15 electrically connected to the negative electrode via the negative electrode lead. The exterior housing can 12 and the sealing assembly 13 are constituted with a metal material mainly composed of, for example, aluminum. The positive electrode terminal 14 and the negative electrode terminal 15 are fixed to the sealing assembly 13 via an insulating member 16. A gas discharging mechanism (not illustrated) is typically provided on the sealing assembly 13.

Hereinafter, the positive electrode, the negative electrode, and the separator constituting the electrode assembly 11, particularly the negative electrode, will be described in detail.

[Positive Electrode]

The positive electrode has a positive electrode core and a positive electrode mixture layer provided on a surface of the positive electrode core. For the positive electrode core, a foil of a metal stable within a potential range of the positive electrode, such as aluminum and an aluminum alloy, a film in which such a metal is disposed on a surface layer thereof, and the like may be used. The positive electrode mixture layer includes a positive electrode active material, a conductive agent, and a binder, and preferably provided on both surfaces of the positive electrode core except for an exposed part of the electrode core where the positive electrode lead is connected. The thickness of the positive electrode mixture layer is, for example, 50 $\mu$m to 150 $\mu$m on one side of the positive electrode core. The positive electrode may be produced by: applying a positive electrode mixture slurry including the positive electrode active material, the conductive agent, the binder, and the like on the surface of the positive electrode core; and drying and subsequently compressing the applied film to form the positive electrode mixture layer on the both surfaces of the positive electrode core.

The positive electrode active material is constituted with a lithium-transition metal composite oxide as a main component. Examples of the metal element other than Li contained in the lithium-transition metal composite oxide include Ni, Co, Mn, Al, B, Mg, Ti, V, Cr, Fe, Cu, Zn, Ga, Sr, Zr, Nb, In, Sn, Ta, and W. A preferable example of the lithium-transition metal composite oxide is a composite oxide containing at least one of Ni, Co, and Mn. Specific examples thereof include a lithium-transition metal composite oxide containing Ni, Co, and Mn, and a lithium-transition metal composite oxide containing Ni, Co, and Al.

Examples of the conductive agent included in the positive electrode mixture layer may include a carbon material such as carbon black, acetylene black, Ketjenblack, and graphite. Examples of the binder included in the positive electrode mixture layer may include a fluororesin such as polytetrafluoroethylene (PTFE) and polyvinylidene fluoride (PVdF), polyacrylonitrile (PAN), a polyimide resin, an acrylic resin, and a polyolefin resin. With these resins, a cellulose derivative such as carboxymethyl cellulose (CMC) or a salt thereof, polyethylene oxide (PEO), and the like may be used in combination.

[Negative Electrode]

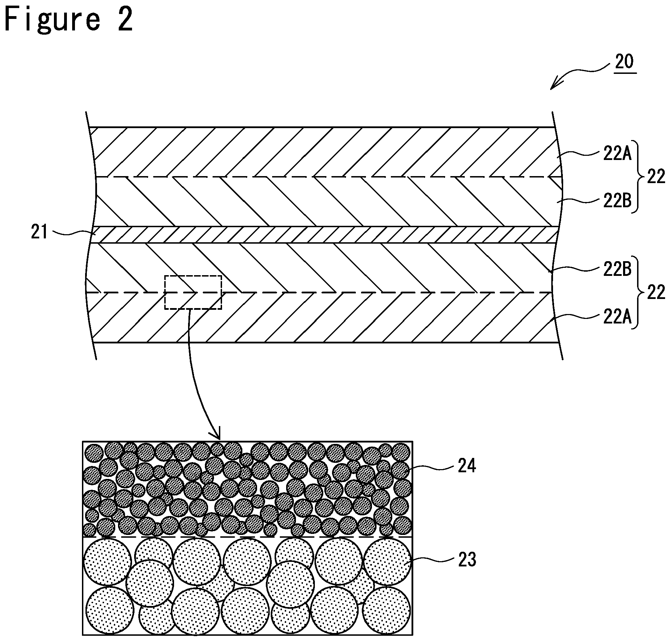

FIG. 2 is a sectional view of a negative electrode 20. As exemplified in FIG. 2, the negative electrode 20 has a negative electrode core 21 and a negative electrode mixture layer 22 provided on a surface of the negative electrode core 21. For the negative electrode core 21, a foil of a metal stable within a potential range of the negative electrode, such as copper and a copper alloy, a film in which such a metal is disposed on a surface layer thereof, and the like may be used. The negative electrode mixture layer 22 is preferably provided on the both surfaces of the negative electrode core 21 except for an exposed part of the electrode core where the negative electrode lead is connected. The thickness of the negative electrode mixture layer 22 is, for example, 50 $\mu$m to 150 $\mu$m on one side of the negative electrode core 21.

The negative electrode mixture layer 22 includes a negative electrode active material, and has a first layer 22A and a second layer 22B. The first layer 22A includes a graphite 23 having a BET specific surface area of 0.5 to 2.5 m$^2$/g as the negative electrode active material. The second layer 22B includes a compound 24 containing an element to be alloyed with lithium as the negative electrode active material. The second layer 22B may include, instead of the compound 24 or in combination with the compound 24, a single substance of one element to be alloyed with lithium.

Although the compound 24 may be included in the first layer 22A and the graphite 23 may be included in the second layer 22B, the first layer 22A preferably includes only the graphite 23 as the negative electrode active material and the second layer 22B preferably includes only the compound 24 as the negative electrode active material. As exemplified in FIG. 2, in the negative electrode mixture layer 22, a region where the graphite 23 and the compound 24 are intermixed is preferably absent at an interface between the first layer 22A and the second layer 22B and in a vicinity thereof, and for example, particles of the compound 24 surrounded by a plurality of particles of the graphite 23 are preferably absent. In this case, the isolation of the compound 24 is suppressed to further improve the high-temperature storage characteristic.

The negative electrode 20 may be produced by using a first negative electrode mixture slurry including the graphite 23 and a second negative electrode mixture slurry including the compound 24. For example, the negative electrode 20 may be produced by: applying the second negative electrode mixture slurry on a surface of the negative electrode core 21; drying and compressing the applied film; subsequently applying the first negative electrode mixture slurry on the applied film; and drying and compressing this second applied film.

In the example illustrated in FIG. 2, the second layer 22B is provided on the surface of the negative electrode core 21, and the first layer 22A is provided on the surface of the second layer 22B. That is, the negative electrode mixture layer 22 has a bilayer structure in which the second layer 22B and the first layer 22A are formed in this order from a side of the negative electrode core 21. The negative electrode mixture layer 22 may have a bilayer structure in which the first layer 22A and the second layer 22B are formed in this order from a side of the negative electrode core 21. Whichever layer structures may have the same effect on the high-temperature storage characteristic of the battery. In the present specification, a layer formed on the surface of the negative electrode core 21 may be referred to as "lower layer", and a layer formed on the surface of the negative electrode core 21 with the lower layer interposed therebetween may be referred to as "upper layer".

In the negative electrode mixture layer 22, the negative electrode active material included in the second layer 22B is present in an amount 0.03 to 9.6 times that of the negative electrode active material included in the first layer 22A. The first layer 22A preferably includes only the graphite 23 as the negative electrode active material, and the second layer 22B preferably includes only the compound 24 as the negative electrode active material; thus, the compound 24 can be said to be present in an amount 0.03 to 9.6 times that of the graphite 23 in the negative electrode mixture layer 22. In this case, both the large capacity and good high-temperature storage characteristic are easily achieved. The thicknesses of the first layer 22A and the second layer 22B are not particularly limited, and preferably 10 $\mu$m to 120 $\mu$m each, and more preferably 15 $\mu$m to 80 $\mu$m each. The thickness of the second layer 22B may be smaller than and may be approximately same as the thickness of the first layer 22A.

The graphite 23 included in the first layer 22A is, for example: a natural graphite such as flake graphite; or an artificial graphite such as massive artificial graphite and graphitized mesophase-carbon microbead. The graphite 23 may be a mixture of two or more types of graphite. On a particle surface of the graphite 23, a conductive coating layer such as amorphous carbon may be formed.

The graphite 23 is a particle having a median diameter on a volumetric basis (D50) of, for example, 5 $\mu$m to 30 $\mu$m, and preferably 10 $\mu$m to 25 $\mu$m. The D50, also referred to as an intermediate diameter, means a particle diameter at which a cumulative frequency is 50% from a smaller particle diameter side in a particle size distribution on a volumetric basis. The D50 may be measured by using a laser diffraction-type particle size distribution measuring device (for example, MICROTRAC HRA, manufactured by NIKKISO CO., LTD.) with water as a dispersion medium.

The BET specific surface area of the graphite 23 is 0.5 to 2.5 $m^2/g$, and more preferably 0.7 to 1.5 $m^2/g$. A BET specific surface area of more than 2.5 $m^2/g$ cannot suppress the lowering of the battery capacity during high-temperature storage. Whereas, a BET specific surface area of less than 0.5 $m^2/g$ cannot achieve a sufficient capacity. The BET specific surface area is measured in accordance with the BET method (nitrogen adsorption method) specified in JIS R1626.

The compound 24 included in the second layer 22B is, as mentioned above, a compound containing an element to be alloyed with lithium. The compound 24 may be a mixture of two or more compounds. Examples of the element to be alloyed with lithium applicable for the negative electrode active material include Al, Ga, In, Si, Ge, Sn, Pb, As, Sb, and Bi. Among them, Si and Sn are preferable, and Si is particularly preferable in the viewpoint of enlarging the capacity.

Examples of the compound 24 containing Si include: a compound containing a silicon oxide phase and Si dispersed in the silicon oxide phase (hereinafter, referred to as "SiO"); and a compound containing a lithium silicate phase and Si dispersed in the lithium silicate phase (hereinafter, referred to as "LSX"). The second layer 22B may include one of the SiO and the LSX, and may include both of the SiO and the LSX as the compound 24.

The SiO and the LSX are particles having, for example, a smaller D50 than the D50 of the graphite 23. The D50 of the SiO and LSX on a volumetric basis is preferably 1 $\mu$m to 15 $\mu$m, and more preferably 4 $\mu$m to 10 $\mu$m. On a particle surface of the SiO and LSX, a conductive layer constituted with a highly conductive material may be formed. A preferable example of the conductive layer is a carbon coating constituted with a carbon material. The thickness of the conductive layer is preferably 1 nm to 200 nm, and more preferably 5 nm to 100 nm considering the achievement of the conductivity and diffusibility of lithium ions into the particles. The second layer 22B may include the conductive agent.

The carbon coating is constituted with, for example, carbon black, acetylene black, Ketjenblack, graphite, a mixture of two or more thereof, and the like. Examples of a method for carbon-coating the particle surface of the SiO and LSX may include: a CVD method using acetylene, methane, or the like; and a method of mixing coal-tar pitch, petroleum pitch, a phenolic resin, or the like with the particles of the SiO and LSX to perform a heat treatment. The carbon coating may be formed by adhering carbon powder such as carbon black to the particle surface using a binder.

A preferable SiO has a sea-island structure in which fine Si particles are approximately-uniformly dispersed in a matrix of amorphous silicon oxide, and represented by a general formula of $SiO_x$ ($0.5 \leq x \leq 1.6$). The content of the Si particles is preferably 35 to 75 mass% based on a total mass of the SiO in the viewpoints of achievement of both battery capacity and cycle characteristic, and the like. For example, a too low content rate of the Si particles lowers the capacity, and a too high content rate of the Si particles lowers the cycle characteristic due to contact between a part of exposed Si particles, uncoated with silicon oxide, and the electrolyte solution.

The average particle diameter of the Si particles dispersed in the silicon oxide phase is typically 500 nm or smaller, preferably 200 nm or smaller, and more preferably 50 nm or smaller before charging and discharging. After charging and discharging, the average particle diameter is preferably 400 nm or smaller, and more preferably 100 nm or smaller. Micronizing the Si particles reduces a change in volume during charging and discharging to improve the cyclic characteristic. The average particle diameter of the Si particles is measured by observing a cross section of the SiO using a scanning electron microscope (SEM) or a transmission electron microscope (TEM), and specifically, determined as an average value of the longest diameters of each of 100 Si particles. The silicon oxide phase is formed by, for example, aggregating particles finer than the Si particles.

A preferable LSX has a sea-island structure in which fine Si particles are approximately-uniformly dispersed in a matrix of lithium silicate represented by a general formula of $Li_{2z}SiO_{(2+z)}$ ($0 < z < 2$). The content of the Si particles is, similar to that in the SiO, preferably 35 to 75 mass% based on a total mass of the LSX. The average particle diameter of the Si particles is typically 500 nm or smaller, preferably 200 nm or smaller, and more preferably 50 nm or smaller before charging and discharging. The lithium silicate phase is formed by, for example, aggregating particles finer than the Si particles.

The lithium silicate phase is, as mentioned above, preferably constituted with a compound represented by $Li_{2z}SiO_{(2+z)}$ ($0 < z < 2$). That is, the lithium silicate phase excludes $Li_4SiO_4$ ($z=2$). Since $Li_4SiO_4$, which is an unstable compound, reacts with water to exhibit alkalinity, $Li_4SiO_4$ may deteriorate Si to cause lowering the charge and discharge capacities. The lithium silicate phase preferably contains $Li_2SiO_3$ ($z=1$) or $Li_2Si_2O_5$ ($z=1/2$) as a main component in the viewpoints of stability, easiness of production, conductivity of lithium ions, and the like.

The SiO may be produced by the following steps.

(1) Si and silicon oxide are mixed at a weight ratio of, for example, 20:80 to 95:5 to produce a mixture.
(2) At least before or after the production of the mixture, the Si and the silicon oxide are crushed to be micronized with, for example, a boll mill.

(3) The crushed mixture is subjected to heat treatment at, for example, a temperature of 600 to 1000°C in an inert atmosphere.

The LSX may be produced by the above steps using lithium silicate instead of the silicon oxide.

Each of the first layer 22A and the second layer 22B includes the binder. For the binder included in the first layer 22A and the second layer 22B, a fluororesin, PAN, a polyimide, an acrylic resin, a polyolefin, and the like may be used, similar to that in the positive electrode 11, but styrene-butadiene rubber (SBR) is preferably used. The first layer 22A and the second layer 22B preferably further include CMC or a salt thereof, polyacrylic acid (PAA) or a salt thereof, polyvinyl alcohol (PVA), and the like.

The first layer 22A and the second layer 22B may include binders differing from each other, but preferably include SBR and CMC or a salt thereof. The CMC or a salt thereof functions as the binder binding between the negative electrode active materials, or the negative electrode active material and the negative electrode core 21, as well as functions as a thickener of the negative electrode mixture slurry. When the first layer 22A and the second layer 22B include SBR and CMC, content ratios of the SBR and CMC may differ in each layer.

The mass ratio of the binder to the negative electrode active material in the second layer 22B ($R_B$) may be 1 time a mass ratio of the binder to the negative electrode active material in the first layer 22A (RA), that is, each of the mass ratios may be the same, but is preferably 1.5 to 10 times, and more preferably 2 to 7 times. $R_B/R_A$ of 1.5 to 10 suppresses intermixing the graphite 23 and the compound 24 at the interface between the first layer 22A and the second layer 22B and in a vicinity thereof, and as a result, the high-temperature storage characteristic is further improved. $R_B/R_A$ of more than 10 is not preferable because of the leading to lower the capacity.

The content of the binder in the first layer 22A is, for example, 0.5 to 5 mass%, and preferably 1 to 3 mass%. The content of the binder in the second layer 22B is, for example, 0.5 to 15 mass%, preferably 1 to 10 mass%, and more preferably 1.5 to 6 mass%. A preferable example of the first layer 22A includes substantially only the graphite 23, SBR, and CMC or a salt thereof. A preferable example of the second layer 22B includes substantially only the compound 24, SBR, and CMC or a salt thereof.

[Separator]

For the separator, a porous sheet having an ion permeation property and an insulation property is used. Specific examples of the porous sheet include a fine porous thin film, a woven fabric, and a nonwoven fabric. As a material of the separator, an olefin resin such as polyethylene and polypropylene, cellulose, and the like are preferable. The separator may have any of a single-layered structure and a laminated structure. On a surface of the separator, a heat-resistant layer and the like may be formed.

EXAMPLES

Hereinafter, the present disclosure will be further described with Examples, but the present disclosure is not limited to these Examples.

<Example 1>

[Production of Positive Electrode]

As the positive electrode active material, a lithium-transition metal composite oxide represented by $LiCo_{1/3}Mn_{1/3}Ni_{1/3}O_2$ was used. 98 parts by mass of the positive electrode active material, 1 part by mass of acetylene black, and 1 part by mass of polyvinylidene fluoride were mixed, and N-methyl-2-pyrrolidone (NMP) was used as a dispersion medium to prepare a positive electrode mixture slurry. Then, this positive electrode mixture slurry was applied on both surfaces of a positive electrode core made of aluminum foil, and the applied film was dried and compressed, and then cut to a predetermined electrode size to produce a positive electrode in which a positive electrode mixture layer was formed on both surfaces of the positive electrode core. An exposed part where a surface of the electrode core was exposed was provided at a central part in a longitudinal direction of the positive electrode, and a positive electrode lead was welded to the exposed part.

[Preparation of First Negative Electrode Mixture Slurry]

As the negative electrode active material, a graphite having a BET specific surface area of 1.0 $m^2/g$ was used. 98 parts by mass of the graphite, 1 part by mass of carboxymethyl cellulose (CMC), and 1 part by mass of styrene-butadiene rubber (SBR) were mixed, and water was used as a dispersion medium to prepare a first negative electrode mixture slurry.

[Preparation of Second Negative Electrode Mixture Slurry]

As the negative electrode active material, a Si-containing compound (SiO) in which fine Si particles were approximately-uniformly dispersed in a matrix of silicon oxide and which is represented by a general formula of $SiO_x$ (x=1) was used. 98 parts by mass of the SiO, 1 part by mass of CMC, and 1 part by mass of SBR were mixed, and water was used as a dispersion medium to prepare a second negative electrode mixture slurry.

[Production of Negative Electrode]

The second negative electrode mixture slurry was applied on both surfaces of a negative electrode core made of copper foil, the applied film was dried and compressed, then the first negative electrode mixture slurry was applied on the applied film, and the second applied film was dried and compressed. In this time, each slurry was applied so that a mass of the graphite was 70 $g/m^2$ and a mass of the SiO was 30 $g/m^2$ (a mass ratio of the SiO to the graphite in the negative electrode mixture layer was 0.43). Then, the product was cut to a predetermined electrode size to produce a negative electrode having a bilayer-structured negative electrode mixture layer in which a lower layer including the SiO (second layer) and an upper layer including the graphite (first layer) were formed, from a side of the electrode core, on both surfaces of the negative electrode core. An exposed part where a surface of the electrode core was exposed was provided at an end part in a longitudinal direction of the negative electrode, and a negative electrode lead was welded to the exposed part.

[Preparation of Non-Aqueous Electrolyte solution]

Into a mixed solvent of ethylene carbonate (EC) and ethyl methyl carbonate (EMC) at a mass ratio of 1:3, $LiPF_6$ was dissolved at a concentration of 1 mol/L to prepare a non-aqueous electrolyte solution.

[Production of Non-Aqueous Electrolyte Secondary Battery]

The positive electrode and the negative electrode were spirally wound with a separator made of polyethylene interposed therebetween, and flatly-formed to produce a wound-type electrode assembly. This electrode assembly and the non-aqueous electrolyte solution were enclosed in an exterior housing body constituted with an aluminum laminated film to produce a non-aqueous electrolyte secondary battery.

<Example 2>

A negative electrode and a non-aqueous electrolyte secondary battery were produced in the same manner as in Example 1 expect that a graphite having a BET specific surface area of 0.5 $m^2/g$ was used instead of the graphite having a BET specific surface area of 1.0 $m^2/g$ as the negative electrode active material in the upper layer.

<Example 3>

A negative electrode and a non-aqueous electrolyte secondary battery were produced in the same manner as in Example 1 expect that a graphite having a BET specific surface area of 2.5 $m^2/g$ was used instead of the graphite having a BET specific surface area of 1.0 $m^2/g$ as the negative electrode active material in the upper layer.

<Example 4>

A negative electrode and a non-aqueous electrolyte secondary battery were produced in the same manner as in Example 1 expect that the mass of the graphite was changed to 97 $g/m^2$ and the mass of the SiO was changed to 3 $g/m^2$ in the production of the negative electrode.

<Example 5>

A negative electrode and a non-aqueous electrolyte secondary battery were produced in the same manner as in Example 1 expect that the mass of the graphite was 9.5 $g/m^2$ and the mass of the SiO was 91.5 $g/m^2$ in the production of the negative electrode.

<Example 5>

A negative electrode and a non-aqueous electrolyte secondary battery were produced in the same manner as in Example 1 expect that the first layer including the graphite was the lower layer and the second layer including the SiO was the upper layer in the production of the negative electrode.

<Comparative Example 1>

A negative electrode and a non-aqueous electrolyte secondary battery were produced in the same manner as in Example 1 expect that a graphite having a BET specific surface area of 3.5 $m^2$/g was used instead of the graphite having a BET specific surface area of 1.0 $m^2$/g as the negative electrode active material in the upper layer.

<Example 7>

A negative electrode and a non-aqueous electrolyte secondary battery were produced in the same manner as in Example 1 expect that the amount of the binder (CMC and SBR) added was 3 mass% and the mass ratio of the CMC and SBR was 2:1 in the preparation of the second negative electrode mixture slurry.

<Example 8>

A negative electrode and a non-aqueous electrolyte secondary battery were produced in the same manner as in Example 7 expect that the mass ratio of the CMC and SBR was 1:2 in the preparation of the second negative electrode mixture slurry.

<Example 9>

A negative electrode and a non-aqueous electrolyte secondary battery were produced in the same manner as in Example 1 expect that the amount of the binder (CMC and SBR) added was 10 mass% and the mass ratio of the CMC and SBR was 9:1 in the preparation of the second negative electrode mixture slurry.

<Example 10>

A negative electrode and a non-aqueous electrolyte secondary battery were produced in the same manner as in Example 9 expect that the mass ratio of the CMC and SBR was 5:5 in the preparation of the second negative electrode mixture slurry.

<Example 11>

A negative electrode and a non-aqueous electrolyte secondary battery were produced in the same manner as in Example 9 expect that the mass ratio of the CMC and SBR was 1:9 in the preparation of the second negative electrode mixture slurry.

[High-Temperature Storage Test (Evaluation of Capacity Maintenance Rate)]

Each of batteries of Examples and Comparative Examples was charged under a temperature environment at 25°C and at a constant current of 1 C until a battery voltage reached 4.0 V, and then discharged until a battery voltage reached 3 V to determine a discharge capacity (Capacity before Storage). Thereafter, the battery was charged again at a constant current of 1 C to 4.0 V, and left to stand under a temperature environment at 60°C for 7 days. After 7 days had been elapsed, the battery was charged and discharged as above to determine a discharge capacity (Capacity after Storage).

$$\text{Capacity Maintenance Rate (\%)} = (\text{Capacity after Storage / Capacity before Storage}) \times 100$$

The calculated capacity maintenance rates are shown in Tables 1 and 2 with types, amounts, and the like of the negative electrode active material or binder.

[Table 1]

| | Active Material in Upper Layer | | | Active Material in Lower Layer | | | SiO/ Graphite | Battery Characteristic |
| --- | --- | --- | --- | --- | --- | --- | --- | --- |
| | Type | BET Specific Surface Area | Amount of Active Material | Type | BET Specific Surface Area | Amount of Active Material | | Capacity Maintenance Rate |
| Comparative Example 1 | Graphite | 3.5m$^2$/g | 70g/m$^2$ | SiO | - | 30g/m$^2$ | 0.43 | 73% |
| Example 1 | Graphite | 1.0m$^2$/g | 70g/m$^2$ | SiO | - | 30g/m$^2$ | 0.43 | 85% |
| Example 2 | Graphite | 0.5m$^2$/g | 70g/m$^2$ | SiO | - | 30g/m$^2$ | 0.43 | 87% |
| Example 3 | Graphite | 2.5m$^2$/g | 70g/m$^2$ | SiO | - | 30g/m$^2$ | 0.43 | 83% |
| Example 4 | Graphite | 1.0m$^2$/g | 97g/m$^2$ | SiO | - | 3g/m$^2$ | 0.03 | 90% |
| Example 5 | Graphite | 1.0m$^2$/g | 9.5g/m$^2$ | SiO | - | 91.5g/m$^2$ | 9.63 | 84% |
| Example 6 | SiO | - | 30/m$^2$ | Graphite | 1.0m$^2$/g | 70g/m$^2$ | 0.43 | 87% |

[Table 2]

| | Binder in Upper Layer | | | Binder in Lower Layer | | | B/A | Battery Characteristic |
| | Type | Content Ratio | Amount of Binder (A) | Type | Content Ratio | Amount of Binder (B) | | Capacity Maintenance Rate |
|---|---|---|---|---|---|---|---|---|
| Example 7 | CMC/SBR | 1/1 | 2 mass% | CMC/SBR | 2/1 | 3 mass% | 1.5 | 89% |
| Example 8 | CMC/SBR | 1/1 | 2 mass% | CMC/SBR | 1/2 | 3 mass% | 1.5 | 89% |
| Example 9 | CMC/SBR | 1/1 | 2 mass% | CMC/SBR | 9/1 | 10 mass% | 5.0 | 93% |
| Example 10 | CMC/SBR | 1/1 | 2 mass% | CMC/SBR | 5/5 | 10 mass% | 5.0 | 93% |
| Example 11 | CMC/SBR | 1/1 | 2 mass% | CMC/SBR | 1/9 | 10 mass% | 5.0 | 92% |

As shown in Table 1, any of the batteries of Examples had a higher capacity maintenance rate after high-temperature storage than the batteries of Comparative Examples, and excellence in the high-temperature storage characteristic. In any of cases where the graphite was added in the upper layer and the SiO was added in the lower layer (Examples 1 to 5) and a case where the SiO was added in the upper layer and the graphite was added in the lower layer (Example 6), the improvement in high-temperature storage characteristic was observed.

In addition, as shown in Table 2, by increasing the amount of the binder in the lower layer including the SiO, the capacity maintenance rate was increased to confirm further improvement of the high-temperature storage characteristic. In this case, the SiO and the graphite were not intermixed in the vicinity of the interface between the upper layer and the lower layer, and the SiO was present only in the lower layer and the graphite was present only in the upper layer, separately.

REFERENCE SINGS LIST

10      NON-AQUEOUS ELECTROLYTE SECONDARY BATTERY
11      ELECTRODE ASSEMBLY
12      EXTERIOR HOUSING CAN
13      SEALING ASSEMBLY
14      POSITIVE ELECTRODE TERMINAL
15      NEGATIVE ELECTRODE TERMINAL
16      INSULATING MEMBER
20      NEGATIVE ELECTRODE
21      NEGATIVE ELECTRODE CORE
22      NEGATIVE ELECTRODE MIXTURE LAYER
22A     FIRST LAYER
22B     SECOND LAYER
23      GRAPHITE
24      COMPOUND

Claims

1.  A negative electrode for a non-aqueous electrolyte secondary battery, comprising:

a negative electrode core; and
a negative electrode mixture layer provided on a surface of the negative electrode core, the negative electrode mixture layer including a negative electrode active material, wherein
the negative electrode mixture layer has:

a first layer including a graphite having a BET specific surface area of 0.5 to 2.5 $m^2/g$ as the negative electrode active material; and
a second layer including at least one of an element to be alloyed with lithium and a compound containing the element as the negative electrode active material.

2.  The negative electrode for a non-aqueous electrolyte secondary battery according to claim 1, wherein:

the first layer includes only the graphite having a BET specific surface area of 0.5 to 2.5 $m^2/g$ as the negative electrode active material; and
the second layer includes only at least one of the element to be alloyed with lithium and the compound containing the element as the negative electrode active material.

3.  The negative electrode for a non-aqueous electrolyte secondary battery according to claim 1 or 2, wherein:

each of the first layer and the second layer includes a binder; and
a mass ratio of the binder to the negative electrode active material in the second layer is 1.5 to 10 times a mass ratio of the binder to the negative electrode active material in the first layer.

4.  The negative electrode for a non-aqueous electrolyte secondary battery according to any one of claims 1 to 3, wherein in the negative electrode mixture layer, the negative electrode active material included in the second layer is present in an amount 0.03 to 9.6 times that of the negative electrode active material included in the first layer.

5.  A non-aqueous electrolyte secondary battery, comprising:

the negative electrode according to any one of claims 1 to 4;
a positive electrode; and
a non-aqueous electrolyte.

# Figure 1

Figure 2

## INTERNATIONAL SEARCH REPORT

| | International application No. |
|---|---|
| | PCT/JP2020/015865 |

### A. CLASSIFICATION OF SUBJECT MATTER
H01M 4/13(2010.01)i; H01M 4/134(2010.01)i; H01M 4/1393(2010.01)i; H01M 4/38(2006.01)i; H01M 4/48(2010.01)i
FI: H01M4/13; H01M4/1393; H01M4/48; H01M4/134; H01M4/38 Z
According to International Patent Classification (IPC) or to both national classification and IPC

### B. FIELDS SEARCHED
Minimum documentation searched (classification system followed by classification symbols)
H01M4/13; H01M4/134; H01M4/1393; H01M4/38; H01M4/48

| Documentation searched other than minimum documentation to the extent that such documents are included in the fields searched | |
|---|---|
| Published examined utility model applications of Japan | 1922–1996 |
| Published unexamined utility model applications of Japan | 1971–2020 |
| Registered utility model specifications of Japan | 1996–2020 |
| Published registered utility model applications of Japan | 1994–2020 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2015-164127 A (MITSUBISHI CHEMICAL CORP.) 10.09.2015 (2015-09-10) claims, paragraphs [0090], [0174], [0191], comparative example 4 | 1–5 |
| A | JP 2015-026579 A (MITSUBISHI CHEMICAL CORP.) 05.02.2015 (2015-02-05) claims | 1–5 |
| A | JP 2015-135811 A (MITSUBISHI CHEMICAL CORP.) 27.07.2015 (2015-07-27) claims | 1–5 |

☐ Further documents are listed in the continuation of Box C.  ☒ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 11 June 2020 (11.06.2020) | 23 June 2020 (23.06.2020) |

| Name and mailing address of the ISA/ | Authorized officer |
|---|---|
| Japan Patent Office 3-4-3, Kasumigaseki, Chiyoda-ku, Tokyo 100-8915, Japan | |
| | Telephone No. |

Form PCT/ISA/210 (second sheet) (January 2015)

| INTERNATIONAL SEARCH REPORT | | International application No. | |
|---|---|---|---|
| Information on patent family members | | PCT/JP2020/015865 | |

| Patent Documents referred in the Report | Publication Date | Patent Family | Publication Date |
|---|---|---|---|
| JP 2015-164127 A | 10 Sep. 2015 | (Family: none) | |
| JP 2015-026579 A | 05 Feb. 2015 | (Family: none) | |
| JP 2015-135811 A | 27 Jul. 2015 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009266705 A

- JP 2015069711 A